# EUROPEAN PATENT APPLICATION

(11) **EP 2 334 059 A1**
(43) Date of publication of application: **15.06.2011**
(21) Application number: 10191639.3
(22) Date of filing: 18.11.2010
(51) Int. Cl.: H04N 5/445, G06F 3/048

(54) **Entertainment system smart keys**

(30) Priority: 19.11.2009 US 621728
(71) Applicant: Robert Bosch GmbH, 70442 Stuttgart (DE)
(72) Inventor: Faenger, Jens, Santa Clara, CA 95054 (US)
(74) Representative: Reinhard - Skuhra - Weise & Partner GbR

(57) **Abstract**

A method of operating an entertainment system having a user interface including a plurality of menus may include computer-implemented steps. Steps may include receiving a menu selection via the user interface. The menu selection may be associated with a menu. The menu may be displayed on the user interface in response to receiving the menu selection. The menu selection may be stored for subsequent retrieval. A key (or button) may be associated with the stored menu selection such that activating the key causes the menu associated with the stored menu selection to be retrieved and displayed on the user interface.

## Description

### BACKGROUND OF THE INVENTION

### 1. Field of the Invention.

The present invention relates to entertainment systems and, more particularly, to entertainment systems that users may utilize frequently.

### 2. Description of the Related Art.

State of the art radios, entertainment systems and televisions provide means that allow the user to select media content. For example, radios may offer a tuning function to find stations on different radio frequency bands. Whenever the user desires to listen to a different station, he has to seek the frequency of the new radio station. This process takes some time. To speed up switching between different stations, most radios provide station keys, also known as preset pushbuttons. Users may assign a radio frequency corresponding to a particular radio station to each pushbutton. By pressing the preset key, the associated frequency may be retrieved and the radio tuner switches to that frequency. If the radio is disposed out of the broadcast range of the station, pressing the button may result in audible noise and/or the playing of a different station with content that might not be of interest to the user.

Similarly, televisions provide a station setup function that assigns each available station a number. By inputting a number, the user may switch to a specific station. If the list of stations is long, the user may have difficulties remembering the correct number. Some advanced televisions provide on-screen menus that allow the user to scroll through the list of available stations and to select a station of interest. thumbnails), or using lists that are sorted by a variety of criteria (e.g., alphabetically, frequency of use, user interest). If the media collection is too large to allow for quick selection from a single list, a typical approach is to use a hierarchy of selection criteria. For example, in order to find a song from a particular artist, the user first selects the music genre, then the artist, the album, and finally the song. Thus, a range of decisions is required by the user in order to specify what media content he is interested in. If the user wants to find the same content again later, he will have to perform the same selection steps again.

What is neither disclosed nor suggested in the art is an entertainment system that overcomes the problems and limitations described above. More particularly, what is neither disclosed nor suggested is an entertainment system that provides for storing of subsequent retrieval menus, menu selections, content, settings, states and/or the like.

### SUMMARY OF THE INVENTION

Embodiments of the present invention may provide shortcuts to access any visible and/or audible state of an entertainment system with just one press of a key or pushbutton. Embodiments may also provide the same quick access to media content from a range of different sources. Techniques may also be provided to associate the content with the shortcut keys. This may allow the user to implicitly or explicitly create shortcuts to system states and content and to invoke them at a later point in time. If the content or parts of it are no longer available during the invocation, content that is similar to the requested content may be offered to the user. Such unavailable content may include unavailable streaming content and broadcast signals from stations that are disposed outside of receiving range. Similar content may be substituted for the unavailable content, either by finding another station or by creating a replacement content selected from content that is available to the system.

The present invention may provide a novel method for browsing through a collection of entertainment media items such as music tracks, news, podcasts, movies, CDs and other audio and video content. In addition, the invention may enable browsing through radio and television station content from AM/FM digital radio, digital television, satellite radio, internet radio, and other streaming media sources of audio/video content. The invention may enable a user to quickly select and/or retrieve content of interest, which makes it especially useful in environments where the user has limited time for interaction with the system, such as when the user is driving a vehicle. The invention may enable the user to easily select individual items, groups of items and playlists, i.e., sequences of items.

The invention comprises, in one form thereof, a method of operating an entertainment system in computer-implemented steps including receiving a menu selection via the entertainment system's user interface. The menu selection may be associated with a menu. The menu may be displayed on the user interface in response to receiving the menu selection. A store command may be received. The store command may instruct the entertainment system to store the menu selection in a storage device. The menu selection may be stored and associated with a key of the entertainment system. Activation of the key may cause retrieval of the menu associated with the stored menu selection and displaying of the menu associated with the stored menu selection on the user interface.

The invention comprises, in another form thereof, a method of operating an entertainment system in computer-implemented steps including receiving a plurality of menu navigation commands via the user interface. The menu navigation commands may include a sequence and/or list of commands, menus and/or instructions used in navigating the entertainment system menus. The menu navigation commands may be stored in a storage device. A store command may be received to store a menu selection. The store command may instruct the entertainment system to store the menu selection in a storage device. The menu selection may be stored and associated with a key of the entertainment system.

The invention comprises, in another form thereof, a method of operating an entertainment system in computer-implemented steps including storing a plurality of navigation attributes. Navigation attributes may be related to a system state, a system setting, a system function, media information, genre information, classification information and/or media source information. A store command may be received to store one or more of the navigation attributes. One or more navigation attributes may be stored in a storage device. Finally, the stored navigation attributes may be associated with a key of the entertainment system.

### BRIEF DESCRIPTION OF THE DRAWINGS

The above mentioned and other features and objects of this invention, and the manner of attaining them, will become more apparent and the invention itself will be better understood by reference to the following description of embodiments of the invention taken in conjunction with the accompanying drawings, wherein:
FIG. 1 is a block diagram of one embodiment of an entertainment system arrangement of the present invention.
FIG. 2 is a diagram of one embodiment of a user interface of an entertainment system that may be used in conjunction with the present invention.
FIG. 3 is a diagram of another embodiment of a user interface of an entertainment system that may be used in conjunction with the present invention.
FIG. 4 is a flow chart of one embodiment of a method of the present invention for operating an entertainment system.
FIG. 5 is a flow chart of another embodiment of a method of the present invention for operating an entertainment system.
FIG. 6 is a flow chart of yet another embodiment of a method of the present invention for operating an entertainment system.

Corresponding reference characters indicate corresponding parts throughout the several views. Although the exemplification set out herein illustrates embodiments of the invention, in several forms, the embodiments disclosed below are not intended to be exhaustive or to be construed as limiting the scope of the invention to the precise forms disclosed.

### DESCRIPTION OF THE PRESENT INVENTION

The present invention may provide a method to enable a user of an entertainment system to make a quick selection of media content. Such quick selection may be particularly useful for retrieving content, menus, functions and/or states that a user may frequently desire to retrieve. As used herein, "media content" or "media items" may include discrete selectable choices available to the user, such as radio stations, CDs, songs, or audio books, for example.

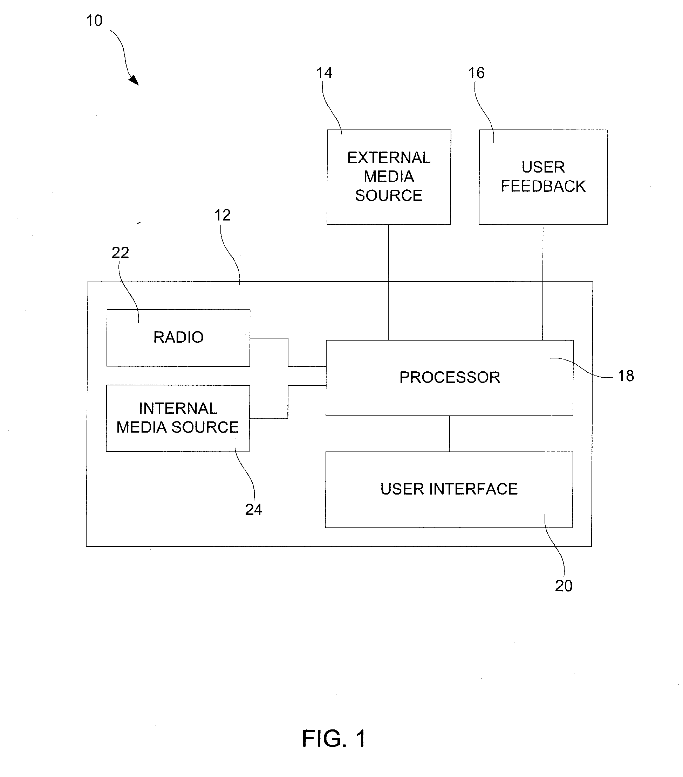

FIG. 1 is a block diagram of one embodiment of an entertainment system arrangement 10 that may be suitable for use in conjunction with the present invention. Arrangement 10 may include an entertainment system 12 that may be communicatively coupled to a user's external music collection 14. Collection 14 may include digital reproductions of audible performances of songs or other pieces of music. System 12 may be at least partially or completely disposed within a vehicle, such as an automobile. However, system 12 may also be disposed in a non-mobile environment, such as a personal residence. System 12 may also actively or passively receive user feedback 16 regarding the user's musical likes and/or dislikes. In the particular illustrated embodiment, information about the contents of collection 14 as well as user feedback 16 are received by an electronic processor 18 of system 12.

Processor 18 may access and analyze the digital music that is included in collection 14 in order to determine what type(s) of music is in collection 14, or in what genre(s) the music falls into. Alternatively, collection 14 may include, in addition to reproductions of the music itself, identifying textual information or other representations about the artist(s) and/or type of music that is in collection 14. In one embodiment, processor 18 may access such identification information in order to determine the musical preference profile of the user without having to analyze the content of the music in collection 14.

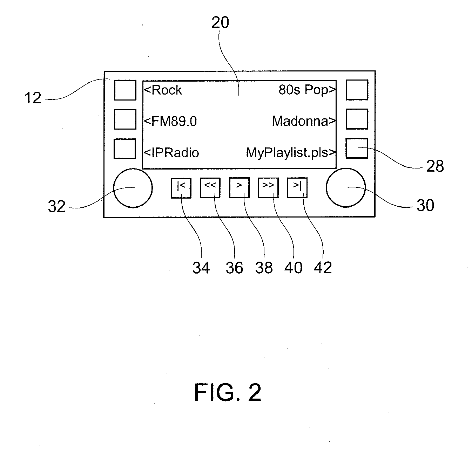

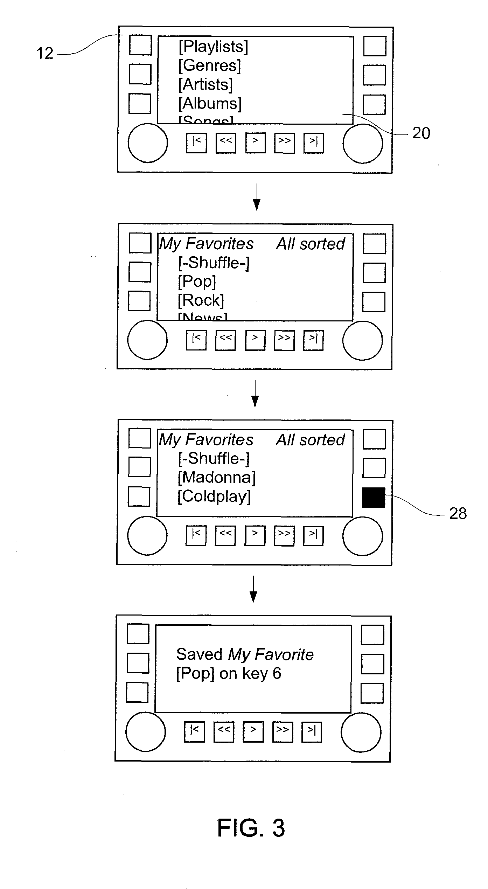

User interface 20 may be similar to the user interface illustrated in FIGS. 2 and 3, and may have a touch screen suitable for displaying content and/or menus. Processor 18 may graphically display on interface 20 representations of the media content available from collections 14, 24 and radio 22. Processor 18 may also modify the presentation on interface 20 based on user feedback 16 that is received.

Sharing the music collection with the entertainment system may be performed according to various methods. A first of such methods may include inserting a CD/DVD with audio or video content into the entertainment system. A second method may include physically connecting a storage device to the entertainment system such as a USB stick, flash memory card, MP3 audio player or portable audio/video player. A third method may include connecting the entertainment system to a built-in storage device, such as a hard drive or flash memory, and thereby using the content of such built-in storage device. A fourth method may include using a short range data connection technology such as Bluetooth to connect the entertainment system with storage devices containing the user's preferred content. A fifth method may include using a wired or wireless data connection between the entertainment system and a remote music repository on the internet.

Currently available entertainment systems are using radio station buttons as a means for personalization and quick access to content. Those keys act as "favorites" as they allow the user to quickly tune to one of the preset radio stations. Embodiments of the present invention improve this concept by offering support for shortcuts or "bookmarks". Instead of merely providing access to radio stations, bookmarks may be used to quickly access any kind of media content and/or any menu available to the entertainment system.

In an example embodiment, a bookmark may exist for visible and/or audible states of the entertainment system 12. For example, the entertainment system 12 may provide menus to allow the user to select media items such as a radio station, a CD, a folder with mp3 and video files or playlists (i.e. sequences of media items). During the selection process, the system 12 may display a range of menus and sub-menus on the screen. Alternatively, the system 12 may use audio dialogs to communicate with the user. The more sub-menus necessary to specify content, the longer it may take the user to finish the selection and to find what he is interested in. Likewise, the more menus and sub-menus, the longer it may take the user to repeat the selection process at a later step. This may be especially helpful when selecting audio content that is very likely to be selected again later.

In order to speed up the repeated selection of the same media content, an example embodiment makes it possible to store and reproduce any menu selection step with a bookmark. In addition, any content displayed on the user interface 20 or played by the entertainment system 12 may be assigned to a bookmark. Such a process is depicted in FIGS. 2 and 3. One embodiment provides a user interface 20 including bookmark buttons 28 and/or a bookmark list. Both may provide functionality of storing a new bookmark. If the user selects the store function 28, the system saves the current menu and/or media selection as a bookmark. For example, if the user selected "rock" in the genre selection menu and presses a bookmark button 28, the system saves a bookmark for "rock music". If the user is more precise, for example, by using the menus to select rock music from a specific artist, the bookmark stores this additional criterion. Lastly, if the user went through all selection menus to select a specific media item (e.g., a song), pressing the bookmark button 28 will store a bookmark for this specific item. Similarly, the user may choose a radio station by using the selection menus or the tuner keys 30, 32, 34, 36, 38, 40, 42 and then press the bookmark button 28 to store this radio station as a bookmark. This function may make the system 12 act like a state-of-the-art radio and thus provides "backward compatibility" for users familiar with such state-of-the-art radios.

When setting a bookmark, the system 12 may store the current state and all selection criteria that lead to it. This may involve the sequences of all menus and sub-menus the user went through. It also may involve other states that lead to the current system state, such as configuration options, information about the user preferences and temporary options set while going through menus and/or ordering of items. The system 12 may also associate with the bookmark information regarding whether the user was in the middle of a menu selection process or whether the entertainment system 12 was playing or displaying media content. If content was being played or displayed on the screen, the system 12 may store with the bookmark information identifying the entity who selected the specific content, (i.e., the user or the system 12). If the selection was made by the system 12, for example, by randomly choosing or recommending an item, information about the selection strategy may be stored with the bookmark. This may be useful later on in order to implement the same recommendation strategy for finding the same or similar content. If playing items from a playlist, information about the current item in the playlist may be stored as well.

The system 12 may also record characteristics of the content that may allow identifying the content later on even if the content is no longer available. For example, if music or a playlist is bookmarked, the system 12 may analyze the type of music and save information such as the genre, artist, mood, speed, age (e.g., year of release), etc.

Storing the selection states and additional parameters and/or attributes with the bookmark may make it possible for the system 12 to reproduce the same state at a later point in time. This approach may allow the user to store specific content such as radio station identifiers, playlists, CDs, and folders containing video files or audio files. Even single files (e.g., audio books) may be bookmarked. On the other hand, more general categories such as music from a genre or from an artist may be assigned to, and/or associated with, a bookmark pushbutton 28.

The system 12 may automatically generate a name for each bookmark from the system states assigned to it. For example, if the user stored a bookmark while he browsed through a menu of available rock music, this bookmark may be called "rock music." The system 12 may generate a unique name for each bookmark. If two bookmarks would otherwise have the same name, the system 12 may use additional system state information in order to create unique names for the two bookmarks. For example, if one bookmark references playing all music of an artist in sequential order and another bookmark references playing all music of the same artist in shuffle play (e.g., random order), this difference may be specified in the names of the bookmarks to thereby name the two bookmarks differently.

The generated bookmark names may be displayed either directly on the bookmark pushbuttons 28, adjacent to pushbuttons 28 (in case of softkeys), or in a bookmark list. If there is enough available area on the screen, additional information about the bookmark may be displayed, such as a date, the number of media items covered by the bookmark, and/or whether the media source addressed or referenced by the bookmark is currently available.

The user may invoke or activate bookmarked content by depressing or otherwise actuating one of bookmark pushbuttons 28 on entertainment system 12, or by selecting one of the bookmarks in a list. By selecting a bookmark, the system 12 may switch to the system state associated with the bookmark. This may involve showing and/or playing the content referenced by the bookmark (e.g., showing a menu, bringing up and audibly playing an audio dialog, playing audio content or displaying graphic content on the screen). For example, if the user was earlier viewing a menu that the user chose, pressing an associated pushbutton 28 may bring back the same menu. If the system 12 was earlier playing a specific song that the user chose, an associated pushbutton 28 may retrieve the same song. If the system 12 was earlier playing streaming content from internet radio or a FM radio station that the user chose, an associated pushbutton 28 may retrieve and/or cause the radio tuner to tune to the same station.

System 12 may offer the user an option to continue playback of the media item at its previous position or to start playback of the media item from the beginning of the media item. Resuming playback of the media item at the previous position may be useful for long media items such as videos, podcasts, CDs and audio books, wherein a substantial length of time may be otherwise required to arrive at the previous position when re-starting from the beginning.

Pressing a bookmark pushbutton 28 may retrieve the state the system was in when the user assigned the state to the pushbutton. Bookmarks may also be associated with system states in which system 12 is automatically choosing the next content. For example, if the system 12 was set to random playback mode while the user was setting the bookmark, system 12 may continue to operate in the random playback mode after the bookmark is invoked. The random playback operation may implement constraints that were in place when the bookmark was set. An example of such a constraint is a random playback of rock music. If the system 12 was playing a playlist while the bookmark was set, the system may offer the user three options upon invocation or implementation: start the playlist from the beginning; continue playback at the position where the bookmark was set; or continue playback with the most recent item played from the playlist.

In the event that invoking a bookmark results in media content playing directly (e.g., no content selection menu is displayed), then system 12 may also offer the user an option to go back to the menu at which playback of the media content was selected. For example, the user may select the menu sequence Rock->Coldplay->X&Y, and may then press "play". The user may then associate a bookmark with that selection by pressing a pushbutton 28. By pressing that same pushbutton to thereby invoke the bookmark, playing of that same musical selection may be initiated. System 12 may thus enable the user to switch playback into the selection. Based on the information stored in the bookmark, system 12 may show or display the same menu that was shown when the album X&Y was selected. The user may start to navigate the menus again from that point. For example, by going back one step in the menu, the user may select any of the artist's other albums that are offered. Thus, it is also possible to quickly change parameters that were stored with the bookmark, such as, for example, switching from shuffle playback to sequential playback. In the event that a user would like to make a new selection that happens to be related to the currently playing selection or content, this context memory feature may save the user from having to manually start and proceed all the way through a complete new content selection process.

In some embodiments, when the user switches away from the bookmark, for example by selecting another bookmark or by manually selecting other content, the previously active bookmark that is being switched away from may be updated. As a specific example, if system 12 is playing a bookmarked playlist, system 12 may update the bookmark with the playlist media item that is currently playing at the point in time at which the bookmark is switched away from. Further, system 12 may also record the current playback position within that particular media item. The recording of the identity of the playback media item as well as the recording of the playback position with the media item at the time of switching away from the bookmark may allow the user to go back to exactly the same state, or point where he left off, when he accesses the bookmark later.

In addition to manually storing menu selections and content on bookmarks, system 12 may also provide for automatic creation of bookmarks. System 12 may record what media content the user selects and which selection steps he implements. As in the manual case, system 12 may generate a unique name for each selection and store the unique names and associated selections in a list. In this automatic case, the store command may be generated automatically. This list may be updated and presented to the user (e.g., in the main menu for content selection). By navigating this list, the user may have a shortcut to recently selected content without the need for manually defining bookmarks. In addition, system 12 may allow the user to convert entries in this list into bookmarks at a later step by assigning them to bookmark pushbuttons 28 or by moving them into the bookmark list.

In some cases, bookmarked content may not be available. For example, the user might have specified a bookmark for content that resided on an external device such as a portable music player or a remote server that system 12 is no longer in communication with. If the content is not available, system 12 may use a recovery strategy to offer the user alternatives to the unavailable content. In some embodiments, system 12 may rely on information associated with the bookmark in order to identify alternatives to the unavailable content. The bookmark may contain information about the menu selections, system states that are active during the selections, and characteristics of the content that is included in the selections (e.g., the content that was selected). This information may enable system 12 to replace missing or unavailable content with content that is similar to the missing or unavailable content. System 12 may then use a range of various replacement strategies such as (a) replace missing selection criteria with similar criteria, (b) replace missing content with similar content, (c) replace item in playlist with similar item, and/or (d) replace missing playlist by dynamically creating a new playlist. A new playlist may be formed in an attempt to reassemble the items in the old playlist. For each item of the missing playlist, system 12 may search available content to find a similar item.

In some embodiments, different alternatives for replacement may exist. System 12 may collect available alternatives and rank them. If more than one "good" alternative exists, system 12 may ask the user to choose one of the alternatives. Alternatively, system 12 may just start presenting content that system 12 considers to be the best match or best proxy for the missing or unavailable content. In an example embodiment, finding replacements for missing/unavailable content may involve scanning the available content in local and remote media sources for useful matches. This may take considerable time if a lot of content is available, which might make dynamic replacement of missing content impractical. In order to avoid this problem, system 12 may perform regularly scheduled maintenance scans on all bookmarks in order to ensure the integrity of the bookmarks and make sure none of their content is missing/unavailable. If bookmarks point to either content or states of system 12 that are no longer valid, then system 12 may find replacements in the background operation (e.g., offline). Then, in the event that the user invokes a bookmark, system 12 may instantly use the found replacements without the need for the lengthy, time-intensive matching phase.

In some embodiments, bookmarks may be associated with streaming content and broadcast sources such as AM/FM radio, satellite radio, digital radio, television broadcast and/or streaming radio and video from the internet. Due to the nature of those sources, the content is constantly changing. When the user assigns a bookmark to a streaming or broadcast station, system 12 may be aware of this streaming distinction. In contrast to individual media items, the broadcast of a streaming station may consist of various media items with very different characteristics. For example, if a user bookmarks an FM radio station, this radio station might play pop and rock music, news, weather and traffic information. In consequence, this radio station can be considered as a playlist that consists of media items with pop, rock, news, weather and traffic characteristics. The sequence of items may be unknown to system 12, but by analyzing the broadcast of the radio station for a longer period of time, system 12 may be able to determine the content distribution (e.g., how much of each content type is played). In addition, statistics about the content variation over the course of a day may be generated.

System 12 may use such strategy to build a "station profile" for all streaming and broadcast stations. System 12 may analyze each bookmarked station to determine what types of content are played and in what distribution or proportions during the day. System 12 may use various data sources to analyze the content, such as the program type of the radio data system (RDS PTY), local and remote databases, and web services with meta-data and/or meta-data embedded in the content such as ID3 tags. In addition, system 12 may use technologies for content based analysis such as music or video genre classification.

System 12 may use various strategies for building a profile from various sources. For example, if system 12 is equipped with a multi-tuner for FM radio, system 12 may be able to receive and analyze content from more than one station at a time, even while the user is listening to an FM station. This may make it possible to build up station profiles in the background without the user noticing or being inconvenienced by it. Likewise, if an internet connection has enough bandwidth, system 12 may tune to several audio and video streaming stations at the same time to build up the profile. If multiple connections are not possible, then system 12 may build up a profile for only the currently playing FM radio station, television station or internet media stream. In both examples, the station bookmarks may be updated with content profiles as soon as such content profiles are available. In addition, profiles of bookmarked stations may be compared with their current content and the profiles may be updated if a change to the overall content of a station is detected.

If the user invokes a station bookmark, system 12 may determine whether the station is still available. If the station is no longer available, then system 12 may attempt to determine a suitable replacement. System 12 may search other streaming and broadcast sources for similar stations. The comparison strategy may depend on how many sources system 12 is able to access at the same time. If system 12 has a multi-tuner or the capability to establish several streaming connections at the same time, system 12 may continuously compare bookmarked stations with other sources. This may be done in the background, without the user being inconvenienced by, or having knowledge of, the comparisons. If the user invokes a bookmark that is associated with an unavailable station, system 12 may rely on the station profiles of all other available stations to instantly determine which station matches best with the unavailable station.

If system 12 has only a single tuner and/or can use only one streaming connection, then system 12 may create station profiles only sequentially. Thus, in the event that the user invokes a bookmark for an unavailable station, system 12 may build station profiles while the user is waiting. In order to make the switch to a similar station as quick as possible, system 12 may not create a long-term profile of each station. Instead, system 12 may use only short samples of each station's broadcast and compare them with the overall profile of the unavailable station. For example, if a station that is now unavailable was previously playing mainly rock and pop music, then system 12 may check whether there is a station that is currently playing a rock or pop song.

In both of the above scenarios, system 12 may inform the user that the bookmarked station is no longer available and may offer to tune to a similar station. If no alternative station was found, system 12 may offer the user to create a "temporary" station. System 12 may use the profile of the bookmarked station to create a playlist with media content that is currently available. The content items in the playlist may resemble the profile of the unavailable station, both in content types offered by the station and also in time variation.

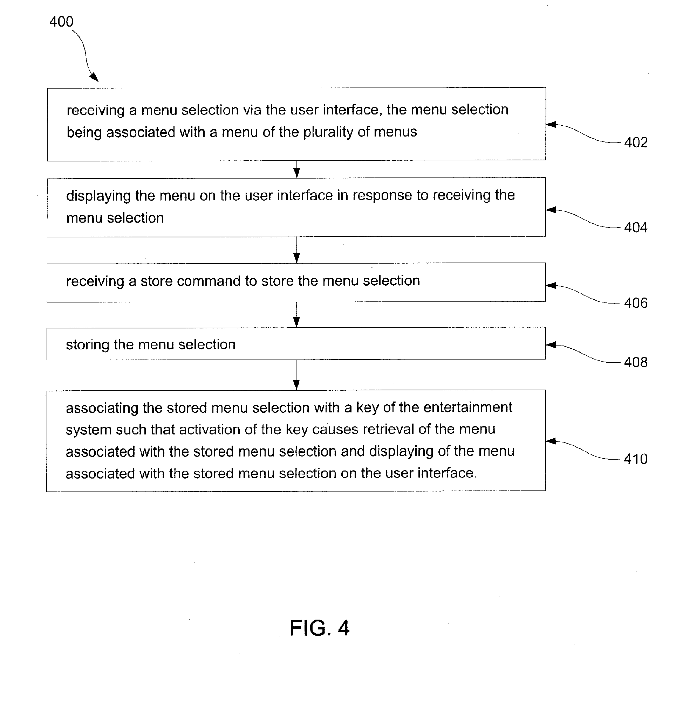

In FIG. 4, there is shown one embodiment of a method 400 of the present invention for operating an entertainment system. In a first step 402, a menu selection is received via the user interface. The menu selection may be associated with a menu. For example, a menu associated with music genre may be selected as a menu selection. Such a menu may display several music genres (e.g., 1980s, rock, rap, etc.) to be played. In a next step 404, the menu may be displayed on the user interface in response to receiving the menu selection. Next, in step 406, a store command may be received. A store command may instruct the entertainment system to store the menu selection in a storage device. In step 408, the menu selection may be stored. In a final step 410, the stored menu selection may be associated with a key of the entertainment system. Activation of the key may causes retrieval of the menu associated with the stored menu selection and displaying of the menu associated with the stored menu selection on the user interface. For example, a menu selection associated with a "country" music genre menu may be activated by pressing (or otherwise actuating) a button on an entertainment system. In such an example, the button would be associated with the "country" music genre menu. Upon activation of the key, the "country" music genre menu would be displayed on the entertainment system's display.

In some embodiments, the method 400 may further include receiving an activation command associated with the key, retrieving the menu associated with the stored menu selection, and displaying the menu associated with the stored menu selection on the user interface. The key may be a software key (or a softkey) and/or a hardware key. In some embodiments, a previously stored menu selection may be disassociated from the key of the entertainment system upon a new menu selection being associated with the key. For example, if a "1990s Alternative" menu selection is first associated with a key, then when a new "Classical" menu selection is associated with the same key, the "1990s Alternative" menu selection will no longer be associated with the key.

In some embodiments, the menu may include sub-menus. In that example, the method 400 may also include receiving a sub-menu selection via the user interface. The sub-menu selection may be associated with a sub-menu. The sub-menu may be displayed on the user interface in response to receiving the sub-menu selection. A store command may be received to store the sub-menu selection, and the sub-menu selection sub-menu may be stored. Further, the stored sub-menu selection may be associated with a key of the entertainment system. In this manner, an activation of the key may causes the retrieval of the sub-menu associated with the stored sub-menu selection. The sub-menu associated with the stored sub-menu selection may be displayed on the user interface.

The method 400 may also include associating a media content with the stored menu selection, and outputting or presenting the media content from the entertainment system upon activation of the key associated with the stored menu selection. In some embodiments, outputting or presenting the media content may include playing the media content automatically and/or playing the media content upon receiving a user input.

In some embodiments, the menu may relate to a genre, a playlist, an artist, an album, a song, a system setting, a source, a command, a function and/or a state. Further, in some embodiments, the menus may be organized in hierarchal manner. In such embodiments, the method 400 may also include receiving an activation command associated with the key, retrieving the menu associated with the stored menu selection, displaying the menu associated with the stored menu selection on the user interface, and receiving a navigation command to navigate among levels of the menu hierarchy.

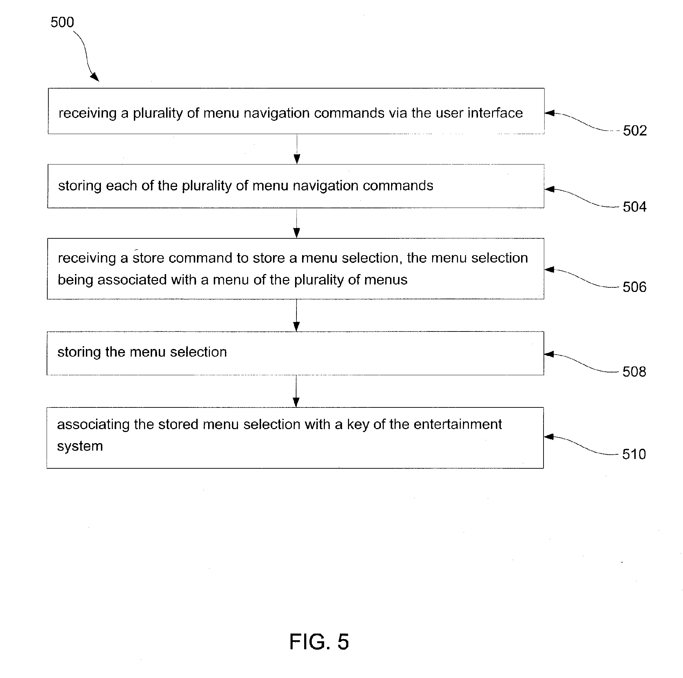

Another embodiment of a method 500 of the present invention for operating an entertainment system is illustrated in FIG. 5. In a first step 502, a plurality of menu navigation commands are received via the user interface. The menu navigation commands may include a sequence and/or list of commands, menus and/or instructions used in navigating the entertainment system menus. In a next step 504, the menu navigation commands may be stored in a storage device. In step 506, a store command may be received to store a menu selection. A store command may instruct the entertainment system to store the menu selection in a storage device. The store command may be generated automatically within the system, or may be in response to a user action, such as depressing an associated pushbutton for a predetermined length of time, for example. In step 508, the menu selection may be stored in a memory device. In a final step 510, the stored menu selection may be associated with a key of the entertainment system. Thus, when the key is later pressed, the stored menu selection may be automatically recalled.

In some embodiments, the method 500 may further include receiving a retrieval command associated with the key, retrieving the menu associated with the stored menu selection, and displaying the menu associated with the stored menu selection on the user interface. In some embodiments, the method 500 may also include retrieving one or more of the menu navigation commands.

In some embodiments, the entertainment system may have access to a source of audio and/or video content (which may include media items). In these embodiments, the method 500 may further include associating one of more media items with the stored menu selection. Upon receiving a retrieval command associated with the key, the entertainment system may play the media item(s) and/or offer a user a playback choice among the media items associated with the stored menu selection. For example, a user may desire to listen to stored audio files in a given playlist. The user may press a key related to the stored audio file playlist menu. The audio files may be played automatically, or the user may be given a choice to start playing the audio file playlist from the beginning or playing the audio file playlist from where the playlist was last playing, for example.

In some embodiments, the source of audio and/or video content may include a radio broadcast, a satellite radio broadcast, a compact disc, a digital video disc, a high-definition video disc, a television broadcast, an audio player, a video player, a multimedia player, an audio file, a video file, an audio playlist, a video playlist, an internet radio broadcast, an internet video broadcast, an audio data stream and/or a video data stream, among others.

In another embodiment of operating an entertainment system in computer-implemented steps, a user interface includes a plurality of menus. A plurality of menu navigation command are received via the user interface. The menu navigation commands may result in selection of a menu selection associated with one of the menus. Each of the plurality of menu navigation commands, and possibly a sequence of the commands, may be stored in a memory device. The stored menu navigation commands, and possibly the sequence of the commands, may be associated with a key (or "pushbutton") of the entertainment system. Thus, when the user afterward presses the key after navigating to a different system state or media content, each of the stored menu navigation commands is implemented, possibly in the stored sequence, to thereby place the entertainment system in the state or at the media content that the user placed the system in previously. Hence, the user may save the media content or system state as a favorite, and may return to that favorite at any time in the future by pressing the key.

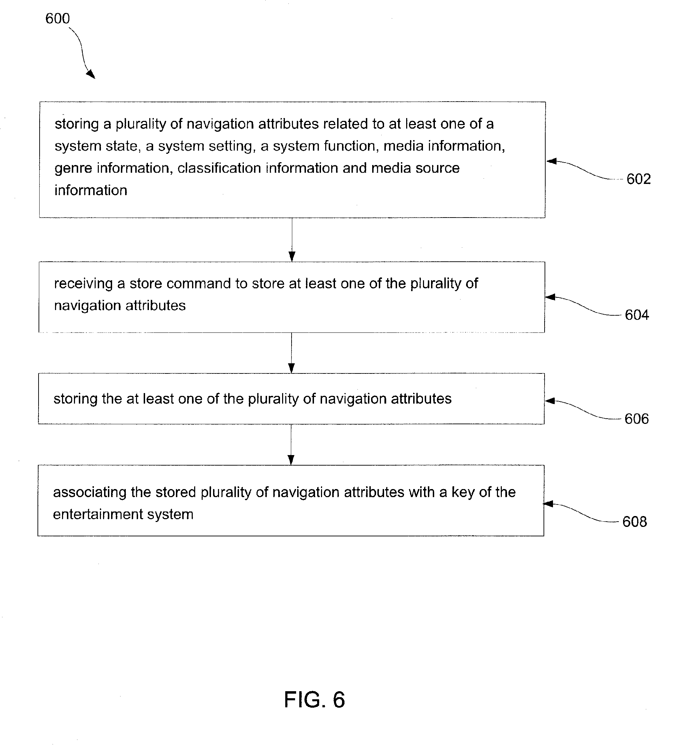

Yet another embodiment of a method 600 of the present invention for operating an entertainment system is illustrated in FIG. 6. In a first step 602, a plurality of navigation attributes may be stored in a memory device. Navigation attributes may be related to a system state, a system setting, a system function, media information, genre information, classification information and/or media source information. In step 604, a store command may be received to store one or more of the navigation attributes. The store command may be generated in response to user input, or may be generated automatically by the system. In step 606, one or more navigation attributes are stored in a storage device. Finally, in step 608, the stored navigation attributes may be associated with a key of the entertainment system. Thus, the navigation attributes may be put into effect when the key is actuated.

In another embodiment, method 600 may further include receiving a retrieval command associated with an activation of the key, retrieving the stored navigation attributes, and replacing current navigation attributes with the stored navigation attributes. In another embodiment, a visual representation associated with the stored navigation attributes may be outputted to a display.

In some embodiments, the "store" command may be implemented upon activation of the key for a predetermined period of time. For example, a user may press an entertainment system key (or button) for two seconds to initiate the store command. In that example, navigation attributes may be associated with that key. Any predetermined time period may be used.

In some embodiments, method 600 may further include generating a unique name for the stored navigation attributes. The unique name may be based, at least in part, on one or more of the stored navigation attributes. For example, if the stored navigation attributes related to an audio playlist of 1970s rock music (with a shuffle function activated), the unique name may be "70s Rock (Shuffle)." The unique name may then be displayed via the user interface for subsequent retrieval of the stored navigation attributes.

For various examples of the how the system 12 may be utilized, the following examples are provided.

Example 1. Jim often listens to his favorite radio station with classic music. He has stored it on a radio station button for quick access. While driving to Los Angeles, he listens to a CD. On arrival in Los Angeles, he switches to the classical radio station. The system has detected that the station is out of range. While Jim was listening to the CD, the system was continuously scanning the FM frequency band to check if the stations saved on radio buttons are still in range. The system also checked what other radio stations are currently playing and how the other radio stations compare with the saved stations. When Jim presses the station key, the system informs him that the radio station is not available anymore and automatically switches to another classic station which plays similar classical music. Without any further interaction, the system helped Jim to listen to classical music. Jim didn't have to manually scan for another station and he can reuse his station setup to select music even though he is currently out of range of all the saved stations.

Example 2. Mariah is listening a lot to pop music from the 80s. The music is stored in her in-car entertainment system. In order to select this kind of music, she goes into the selection menus and chooses pop music, followed by 80s pop. In the next menu she then chooses an album of one of her favorite artists. In addition, she likes listening to the latest audio book stored on the portable mp3 player which is connected to the in-car system. In order to listen to the audio book, she goes into the menu and selects "Artist", followed by "Ken Follett", followed by "World Without End." Then she presses "play". Since she switches between 80s music and the audio book a lot, she uses the bookmark feature of the system. While the audiobook is playing, she presses the first bookmark/station button for two seconds. The system confirms that the system stored a bookmark for that audio book on the first bookmark button. The system also stores which part of the audiobook she is currently listening to. Then she goes into the menu and selects pop, followed by 80s pop. Since she always listens to different artists, she creates a bookmark for the artist selection menu by pressing the second bookmark button for two seconds. Now she can switch between the audiobook and the 80s music just by pressing one of the two buttons. Whenever she switches to the audiobook, it will continue exactly at the position that she listened to last. When she switches to the 80s music, she just selects an album to play. By using the bookmark she saves a lot of time interacting with the system.

Example 3. Paula listens a lot to a playlist called "Paula's all time favorites". She is listening to it in shuffle play to get a bit of variety. For quick access she created a bookmark to this playlist by pressing for two seconds on the first bookmark button while a song from the playlist is playing. When she did that, the name of the playlist, the current song and the shuffle setting were recorded. Whenever she is pressing the first bookmark button now, the system starts playing from the playlist. Since the bookmark recorded the shuffle setting, the system knows to randomly choose songs instead of playing them in the preset order. Recently she rearranged her music, deleted and added some songs. In consequence, songs that were referenced by the playlist no longer exist in her entertainment system. However, the system still works fine. Whenever the system now comes across one of the songs in the playlist which are not available anymore, the system finds a song that is similar to the missing song. The system also displays a brief notification to let Paula know why the system is playing a different song.

The invention as described herein may include one or more novel features, including the following:
- Bookmarks may be assigned to any visible or audible state of an entertainment system, e.g., any function and menu available in the system and any kind of media content accessible such as CDs, radio broadcast, TV broadcast, audio/video files, internet audio/video streaming and playlists.
- Bookmarks may remember the selected content and the selection context, e.g., the sequence of menu selections and other steps that lead to the selection. In addition, bookmarks may record system states that are related to the playback of the content such as shuffle, current media item and playback position within the item.
- Bookmarks may also record characteristics of the selected content that allow identifying the content later even if the selected content is not available anymore.
- Lengthy selections in a sequence of menus may be reduced to one button press, which may be beneficial in time-constrained environments such as the car.
- Bookmarks are a novel extension of the existing radio station buttons. Since users are already familiar with radio buttons, they should easily get used to the benefits of the invention. Bookmarks may allow uniform access to all kinds of media content from different sources, removing the burden of switching between different sources (no radio or CD mode, etc.).
- Automatic naming of bookmarks by using the system states the bookmarks reference. If two bookmarks would have the same name, additional system state information may be used to make names unique.
- The system may display bookmarks with the bookmark names in a list, on or next to buttons (in case of softkeys). The display may include additional information about the bookmarked content.
- On accessing bookmarked content, the system may offer to continue playback or restart playback in the current media item. If a playlist was bookmarked, the system may also offer to restart the playlist or continue with the previously played item. The playback may implement bookmarked system states such as shuffle.
- If a bookmark directly points to media content, the system may offer a function to go back to the menu from which that content was selected. This may enable making changes to the selection or to find new content based on the bookmarked content. This context memory may save the user from manually starting a complete new content selection in case his selection is related to bookmarked content.
- Upon switching between bookmarks, or when the user manually selects new content, the last active bookmark may be updated. Information that is relevant to its state may be recorded, such as the last playing item and the position within that item.
- "Auto" bookmarking of all user-initiated content selections. The system may display those "auto" bookmarks and enable the user to invoke the associated content or to turn them into regular bookmarks later.
- "Smart" bookmarks: if bookmarked content is unavailable, the system may use state information and content classification stored within bookmarks to find similar content from all available media sources. Different strategies may be applied for replacement:
- Replace missing selection criteria with similar criteria
- Replace missing content with similar content
- Replace item in playlist with similar item
- Replace missing playlist by dynamically creating a new, similar playlist.
- Maintenance scan of bookmarks: regularly check if bookmarked content is still available.
   If not, find alternative content by applying the replacement strategies discussed before.
   Attach found results to bookmarks to enable quick system response when user selects unavailable bookmark.
- "Auto tuning" radio buttons: Create station profile for bookmarked streaming or broadcast content such as AM/FM radio, satellite radio, digital radio, TV broadcast as well as audio/video streaming from the internet. Profile may express what content is typically played, including distribution during the day/week. If a bookmarked station is not available anymore, another station with a similar station profile may be found. If no similar station is available, the system may use other similar content to mimic the profile of the station, both in content types and content distribution.
- "Auto tuning" buttons may make use of multi-tuner or multiple streaming connections to create station profiles in the background and to find matches between bookmarked and available stations. If only a single tuner or single connection is available, the system may use simplified station profiles to speed up the finding of matches.

The invention has been described herein as pertaining primarily to identifying audio preferences of listeners and tailoring audio offerings to those preferences. However, the present invention may be equally applicable to identifying video preferences of listeners and tailoring video offerings to those preferences. Further, the present invention may be equally applicable to menu selection in navigation systems, stationary and portable radios, portable music players and/or other entertainment systems.
While this invention has been described as having an exemplary design, the present invention may be further modified within the spirit and scope of this disclosure. This application is therefore intended to cover any variations, uses, or adaptations of the invention using its general principles.

## Claims

1. A method of operating an entertainment system having a user interface including a plurality of menus, the method comprising the computer-implemented steps of:
receiving a menu selection via the user interface, the menu selection being associated with a menu of the plurality of menus;
displaying the menu on the user interface in response to receiving the menu selection;
receiving a store command to store the menu selection;
storing the menu selection; and
associating the stored menu selection with a key of the entertainment system such that activation of the key causes retrieval of the menu associated with the stored menu selection and displaying of the menu associated with the stored menu selection on the user interface.

2. The method of claim 1, further comprising:
receiving an activation command associated with the key;
retrieving the menu associated with the stored menu selection; and
displaying the menu associated with the stored menu selection on the user interface.

3. The method of claim 1, further comprising disassociating a previously stored menu selection from the key of the entertainment system.

4. The method of claim 1, wherein the menu comprises a plurality of sub-menus, the method further comprising:
receiving a sub-menu selection via the user interface, the sub-menu selection being associated with a sub-menu of the plurality of sub-menus;
displaying the sub-menu on the user interface in response to receiving the sub-menu selection;
receiving a store command to store the sub-menu selection;
storing the sub-menu selection; and
associating the stored sub-menu selection with a key of the entertainment system such that activation of the key causes retrieval of the sub-menu associated with the stored sub-menu selection and displaying of the sub-menu associated with the stored sub-menu selection on the user interface.

5. The method of claim 1, further comprising:
associating a media content with the stored menu selection; and
outputting the media content from the entertainment system upon activation of the key associated with the stored menu selection.

6. The method of claim 1, wherein the menu relates to at least one of a genre, a playlist, an artist, an album, a song, a system setting, a source, a command, a function and a state.

7. The method of claim 1, wherein the plurality of menus are organized as a menu hierarchy, the method further comprising;
receiving an activation command associated with the key;
retrieving the menu associated with the stored menu selection;
displaying the menu associated with the stored menu selection on the user interface; and receiving a navigation command to navigate among levels of the menu hierarchy.

8. The method of claim 1, comprising the further computer-implemented steps of:
receiving a plurality of menu navigation commands via the user interface;
storing each of the plurality of menu navigation commands;
receiving a retrieval command associated with the key;
retrieving the menu associated with the stored menu selection;
displaying the menu associated with the stored menu selection on the user interface; and
retrieving at least one of the plurality of menu navigation commands.

9. The method of claim 8, wherein the entertainment system has access to a source of audio and/or video content including a plurality of media items, the method further comprising:
associating at least one of the media items with the stored menu selection; and
upon receiving a retrieval command associated with the key, at least one of:
playing the at least one of the media items on the entertainment system; and
offering a user a playback choice among the media items associated with the stored menu selection.

10. The method of claim 8, further comprising:
storing, in association of the menu selection, at least one attribute of the menu selection;
receiving a retrieval command associated with the key;
ascertaining that the menu selection associated with the key is unavailable;
identifying a replacement menu item having similar attributes as the unavailable menu item; and
playing the replacement menu item on the entertainment system.

11. The method of claim 8, wherein the menu selection comprises a radio station broadcast, the method further comprising:
storing, in association of the radio station, a station profile;
identifying a replacement radio station broadcast having a similar station profile as the radio station broadcast associated with the key;
ascertaining that the radio station broadcast associated with the key is unavailable, the receiving and ascertaining step occurring after the identifying step; and
playing the replacement radio station broadcast on the entertainment system in response to the receiving and ascertaining steps.

12. The method of claim 8, wherein the entertainment system has access to a source of audio and/or video content, the source of audio and/or video content comprising at least one of a radio broadcast, a satellite radio broadcast, a compact disc, a digital video disc, a high-definition video disc, a television broadcast, an audio player, a video player, a multimedia player, an audio file, a video file, an audio playlist, a video playlist, an internet radio broadcast, an internet video broadcast, an audio data stream and a video data stream.

13. The method of claim 1, comprising the further computer-implemented steps of:
storing a plurality of navigation attributes related to at least one of a system state, a system setting, a system function, media information, genre information, classification information and media source information;
receiving a store command to store at least one of the plurality of navigation attributes;
storing the at least one of the plurality of navigation attributes; and
associating the stored plurality of navigation attributes with a key of the entertainment system.

14. The method of claim 13, further comprising:
receiving a retrieval command associated with an activation of the key;
retrieving the stored plurality of navigation attributes;
replacing a current plurality of navigation attributes with the stored plurality of navigation attributes; and
outputting a visual representation associated with the stored plurality of navigation attributes to a display.

15. The method of claim 13, wherein the store command is issued automatically by the system, and wherein receiving a store command occurs upon activation of the key for a predetermined amount of time, the method further comprising generating a unique name for the stored plurality of navigation attributes, the unique name being based, at least in part, on at least one of the stored plurality of navigation attributes.
